# EUROPEAN PATENT APPLICATION

(11) **EP 4 579 402 A1**
(43) Date of publication of application: **02.07.2025**
(21) Application number: 23867827.0
(22) Date of filing: 09.06.2023
(51) Int. Cl.: G06F 3/039

(54) **SLEEVE FOR OPERATING POINTING DEVICES**

(30) Priority: 20.09.2022 JP 2022148761
(71) Applicant: Sumitomo Rubber Industries, Ltd., Kobe-shi, Hyogo 651-0072 (JP)
(72) Inventor: MOTOKAWA, Yuki, Kobe-shi, Hyogo 651-0072 (JP); HIRANO, Atsushi, Kobe-shi, Hyogo 651-0072 (JP)
(74) Representative: Manitz Finsterwald Patent- und Rechtsanwaltspartnerschaft mbB
(86) International application number: PCT/JP2023/021497
(87) International publication number: WO 2024/062698

(57) **Abstract**

A pointing device operating sleeve 2 includes a palm cover 4 and an arm cover 6. The palm cover 4 includes a back-side panel 10, a palm-side panel 12, and a first opening 14. The first opening 14 includes an outside end 16, an inside end 18, a back-side edge 20, and a palm-side edge 22. The palm-side edge 22 is positioned on a bottom side with respect to the back-side edge 20. The palm-side panel 12 has an area that is less than an area of the back-side panel 10.

## Description

### Technical Field

The present specification discloses a sleeve that is suitable for use in operating a pointing device, such as a mouse.

### Background Art

E-sports are categorized into the following seven genres: shooting games (FPS/TPS); MOBA (Multiplayer Online Battle Arena); RTS (Real Time Strategy); fighting games; sports video games; DCG (Digital Card Games); and puzzle games. A player playing a shooting game operates a mouse to participate in the game. The player is required to have agility. The player's hand rubs intensely against a mouse pad.

Japanese Laid-Open Patent Application Publication No. 2001-265529 discloses a protective gear for an operator operating a pointing device, such as a mouse. This protective gear can reduce damage to the operator's hand. However, this protective gear is not suitable for protecting a hand of an e-sports player. Moreover, this protective gear hinders an action made by the player.

As a protective gear for e-sports players, there is an arm cover (trade name "AIM COVER") commercially available from BeANCA, Inc. This arm cover is configured to cover a hand and an arm of a player. This arm cover allows the hand and a mouse pad to smoothly slide on each other. This arm cover can contribute to the operability of the mouse.

### Citation List

### Patent Literature

PTL 1: Japanese Laid-Open Patent Application Publication No. 2001-265529

### Summary of Invention

### Technical Problem

When a player wearing a commercially available arm cover holds a mouse, the arm cover comes into contact with the mouse. As the player continues operating the mouse, the contact between the arm cover and the mouse causes displacement of the arm cover with respect to the hand, and also causes wrinkles on the arm cover. Such displacement of and wrinkles on the arm cover hinder the operability of the mouse.

It is an intention of the applicant of the present application to provide a sleeve that sufficiently protects a hand of a person operating a pointing device and that is less likely to hinder an action made by the player.

### Solution to Problem

A pointing device operating sleeve disclosed in the present specification includes: a palm cover configured to cover a part of a palm, the palm cover including a first opening; and an arm cover configured to cover at least a part of a forearm, the arm cover being continuous with the palm cover and including a second opening. The first opening includes an outside end, an inside end, a back-side edge, and a palm-side edge, the back-side edge and the palm-side edge each being positioned between the outside end and the inside end. The palm-side edge is, at least partly, positioned on a bottom side with respect to the back-side edge.

### Advantageous Effects of Invention

The above pointing device operating sleeve is suitable for protecting a hand of a person operating a pointing device. Displacement of and wrinkles on this sleeve due to its contact with the pointing device are less likely to occur. This sleeve can contribute to the operability of the pointing device.

### Brief Description of Drawings

FIG. 1 is a front view showing a pointing device operating sleeve according to one embodiment.
FIG. 2 is a rear view showing the sleeve of FIG. 1.
FIG. 3 is a left side view showing the sleeve of FIG. 1.
FIG. 4 is an enlarged view showing a part of the sleeve of FIG. 2.
FIG. 5 is a sectional view taken along line V-V of FIG. 1.
FIG. 6 is a sectional view taken along line VI-VI of FIG. 1.
FIG. 7 is a front view showing the sleeve of FIG. 1 together with an upper limb of a player.
FIG. 8 is a sectional view taken along line VIII-VIII of FIG. 7.
FIG. 9 is a front view showing, in an enlarged manner, a part of the sleeve of FIG. 7 together with a hand of the player.
FIG. 10 is a rear view showing the sleeve of FIG. 9 together with the hand of the player.
FIG. 11 is an enlarged view showing a part of the sleeve of FIG. 7 together with the hand of the player.
FIG. 12 is an enlarged sectional view of a zone that is denoted by reference sign XII of FIG. 11.
FIG. 13 is an enlarged view showing a part of the sleeve of FIG. 7 together with the hand of the player.
FIG. 14 is an enlarged sectional view of a zone that is denoted by reference sign XIV of FIG. 13.
FIG. 15 is an enlarged rear view showing the sleeve of FIG. 7 together with the hand of the player and a mouse.

### Description of Embodiments

Hereinafter, preferred embodiments are described in detail with reference to the accompanying drawings as necessary.

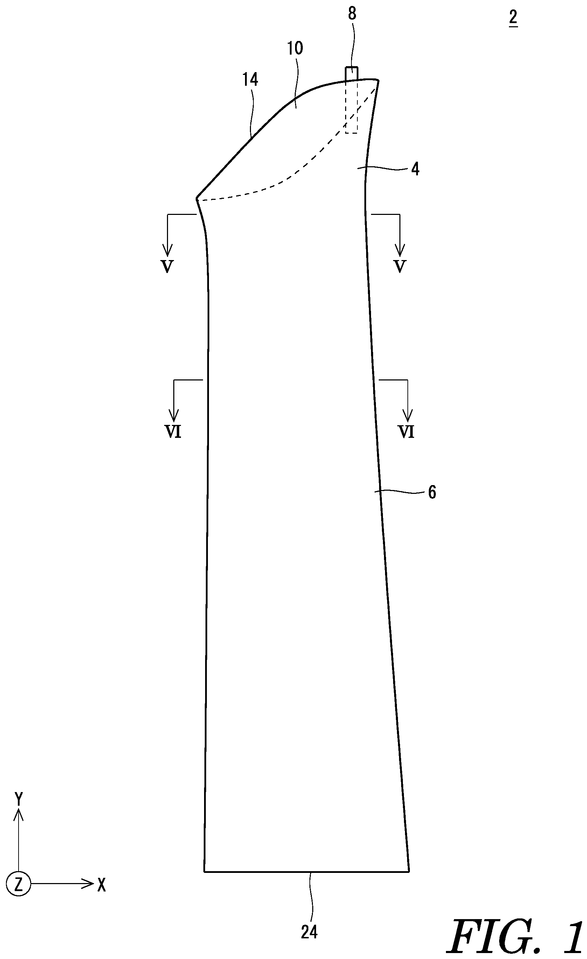

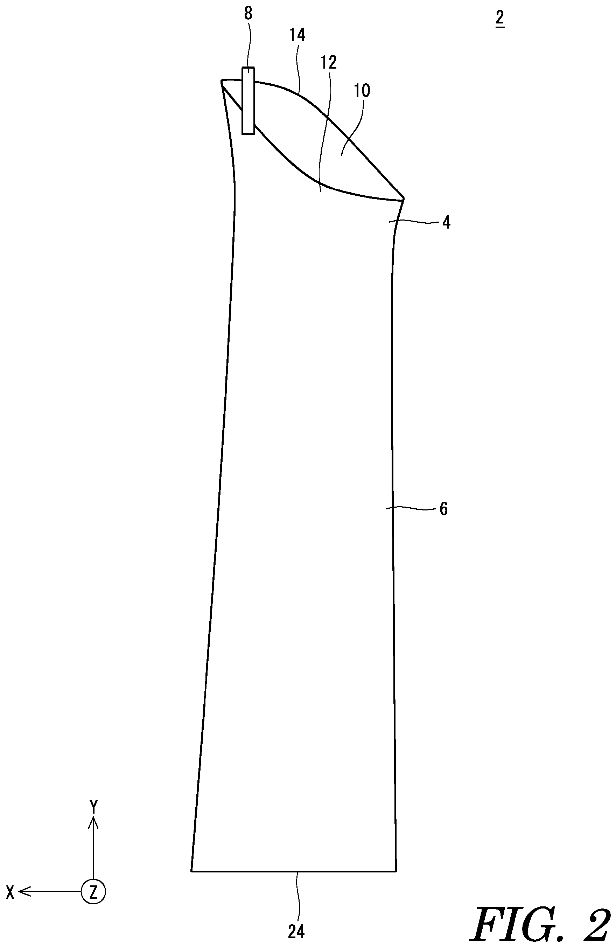

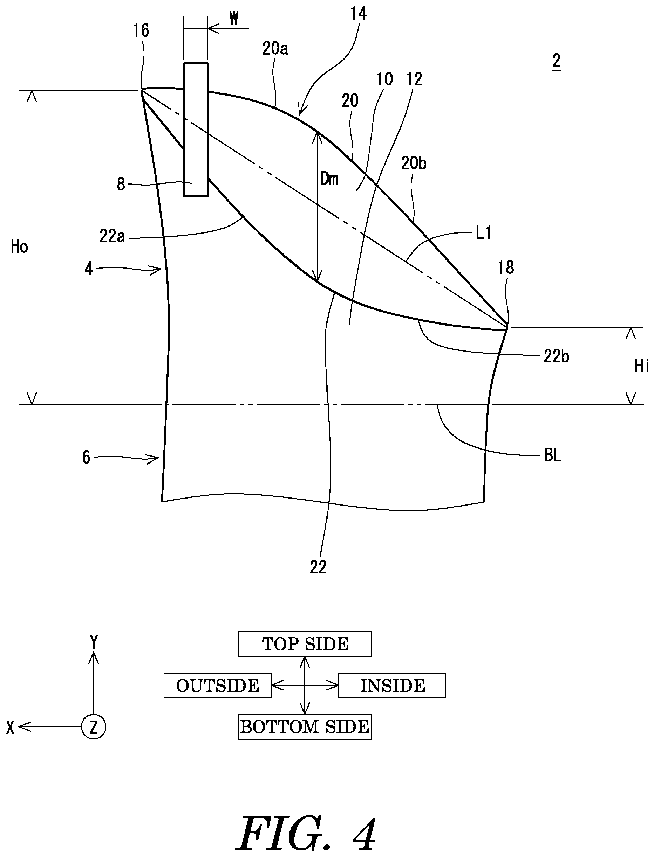

FIGS. 1 to 6 show a pointing device operating sleeve 2, which includes a palm cover 4 and an arm cover 6. The sleeve 2 further includes a band 8. As described below in detail, the sleeve 2 is worn on the right upper extremity of a player. Although not illustrated, a sleeve for the left upper extremity has a shape that is left-right reversed from the shape of the sleeve 2 shown in FIG. 1. In FIGS. 1 to 4, an arrow X represents a width direction; an arrow Y represents a length direction; and an arrow Z represents a thickness direction. In FIG. 1, the right side is the outside, and the left side is the inside. In FIGS. 2 and 4, the left side is the outside, and the right side is the inside. In FIGS. 1 to 4, the upper side is the top side, and the lower side is the bottom side.

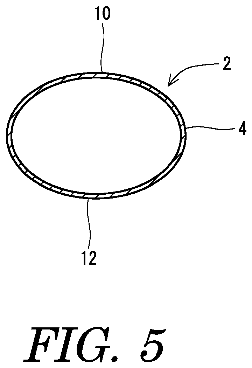

It is clear from FIG. 5 that the palm cover 4 is tubular. As shown in FIGS. 1 to 4, the palm cover 4 includes a back-side panel 10, a palm-side panel 12, and a first opening 14. In the present embodiment, the palm-side panel 12 is integrated with the back-side panel 10. Accordingly, on the palm cover 4, there is no visible boundary line between the back-side panel 10 and the palm-side panel 12. Alternatively, the palm-side panel 12 may be formed separately from the back-side panel 10, and may be joined to the back-side panel 10. In this case, there is a seam between the back-side panel 10 and the palm-side panel 12. Typically, the palm-side panel 12 is joined to the back-side panel 10 by sewing them together.

As shown in FIG. 4, the first opening 14 includes an outside end 16, an inside end 18, a back-side edge 20, and a palm-side edge 22. In the present embodiment, the outside end 16 is positioned on the top side (the upper side in FIG. 4) with respect to the inside end 18. The back-side edge 20 is positioned between the outside end 16 and the inside end 18. The outside end 16 and the inside end 18 are not included in the back-side edge 20. The palm-side edge 22 is also positioned between the outside end 16 and the inside end 18. The outside end 16 and the inside end 18 are not included in the palm-side edge 22.

In FIG. 4, denoted by reference sign L1 is a straight line that connects between the outside end 16 and the inside end 18. The back-side edge 20 is, in its entirety, positioned on the top side (the upper side in FIG. 4) with respect to the straight line L1. The back-side edge 20 may be partly positioned on the top side with respect to the straight line L1. The palm-side edge 22 is, in its entirety, positioned on the bottom side (the lower side in FIG. 4) with respect to the straight line L1. The palm-side edge 22 may be partly positioned on the bottom side with respect to the straight line L1.

The palm-side edge 22 is, in its entirety, positioned on the bottom side with respect to the back-side edge 20. In other words, at any position in the width direction X, the height of the palm-side edge 22 is less than the height of the back-side edge 20. In the present specification, the height is defined as a distance in the length direction Y from a boundary line BL (which will be described below in detail). The palm-side edge 22 may be partly positioned on the top side with respect to the back-side edge 20.

In the present embodiment, the back-side edge 20 has a shape protruding toward the top side. The back-side edge 20 includes a first edge 20a and a second edge 20b. The second edge 20b is positioned on the inside (the right side in FIG. 4) with respect to the first edge 20a. The first edge 20a extends from the outside toward the inside and also toward the bottom side. In other words, the height of the first edge 20a decreases gradually from the outside toward the inside. The second edge 20b also extends from the outside toward the inside and also toward the bottom side. In other words, the height of the second edge 20b decreases gradually from the outside toward the inside. The inclination angle of the second edge 20b relative to the width direction is greater than the inclination angle of the first edge 20a relative to the width direction. In other words, the decrease rate of the height of the second edge 20b is greater than the decrease rate of the height of the first edge 20a. The height of the first edge 20a may be constant from the outside toward the inside.

The palm-side edge 22 has a shape protruding toward the bottom side. The palm-side edge 22 includes a third edge 22a and a fourth edge 22b. The fourth edge 22b is positioned on the inside with respect to the third edge 22a. The third edge 22a extends from the outside toward the inside and also toward the bottom side. In other words, the height of the third edge 22a decreases gradually from the outside toward the inside. The fourth edge 22b also extends from the outside toward the inside and also toward the bottom side. In other words, the height of the fourth edge 22b decreases gradually from the outside toward the inside. The inclination angle of the third edge 22a relative to the width direction is greater than the inclination angle of the fourth edge 22b relative to the width direction. In other words, the decrease rate of the height of the third edge 22a is greater than the decrease rate of the height of the fourth edge 22b. The height of the fourth edge 22b may be constant from the outside toward the inside.

Due to the above-described shapes of the back-side edge 20 and the palm-side edge 22, there is a difference between the area of the back-side panel 10 and the area of the palm-side panel 12. The area of the back-side panel 10 is greater than the area of the palm-side panel 12. That is, the area of the palm-side panel 12 is less than the area of the back-side panel 10.

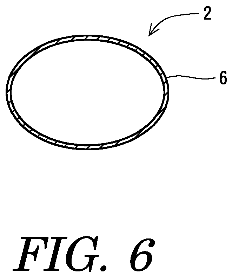

It is clear from FIG. 6 that the arm cover 6 is tubular. As shown in FIGS. 1 to 4, the arm cover 6 is continuous with the palm cover 4. In the present embodiment, the arm cover 6 is integrated with the palm cover 4. Therefore, on the sleeve 2, the boundary line BL (see FIG. 4) between the palm cover 4 and the arm cover 6 is not visible. The boundary line BL coincides with the position of a wrist crease, which will be described below in detail. The arm cover 6 includes a second opening 24.

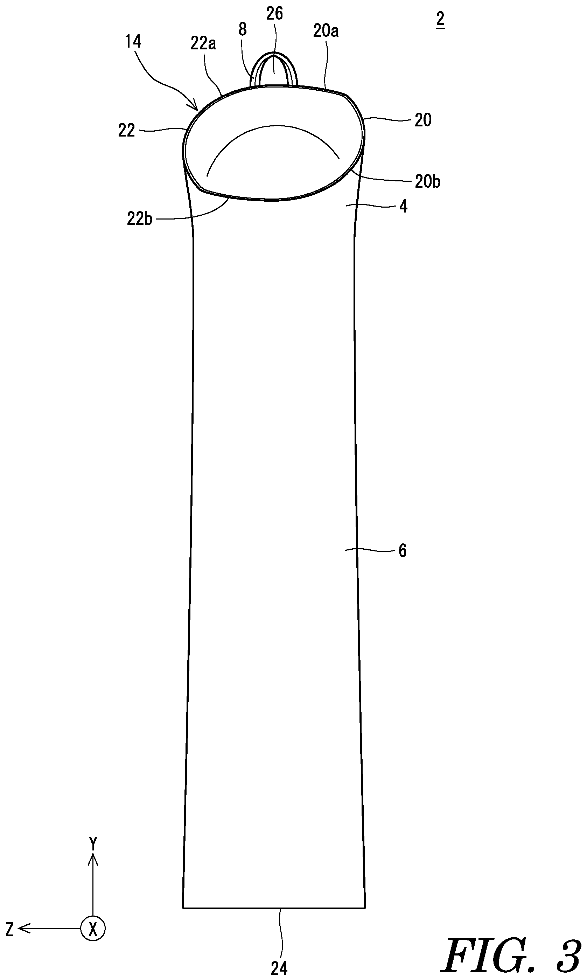

The band 8 is attached to the palm cover 4. The attachment of the band 8 to the palm cover 4 is achieved by sewing both ends of the band 8 and the vicinities of both the ends on the palm cover 4. The band 8 may be attached to the palm cover 4 not by sewing, but by other means. The band 8 may be attachable to and detachable from the palm cover 4. As shown in FIG. 3, the band 8 forms a hole 26 on the sleeve 2.

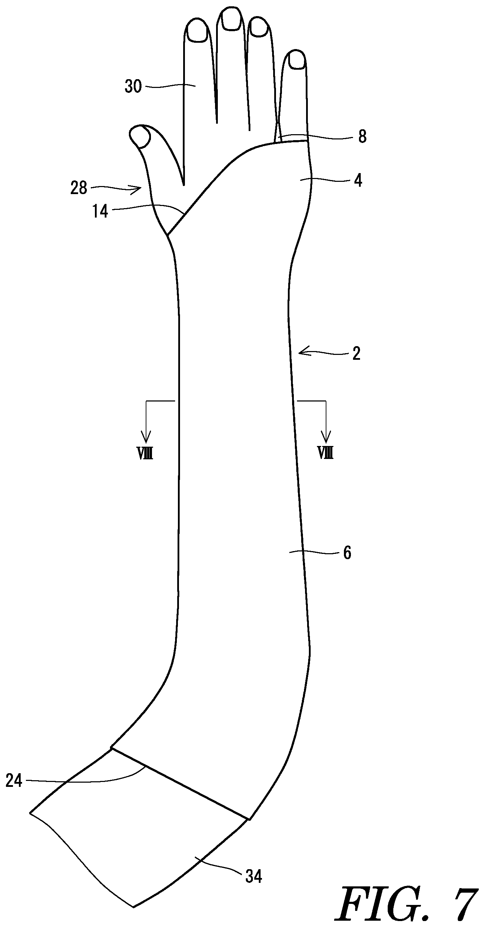

FIG. 7 is a front view showing the pointing device operating sleeve 2 of FIG. 1 together with an upper limb 28 of the player. In FIG. 7, a hand 30 is passed through the palm cover 4. It is clear from FIGS. 1 to 4 and 7 that the diameter of the palm cover 4 increases from the wrist toward the fingertips. The palm cover 4 having such a shape fits to the hand 30.

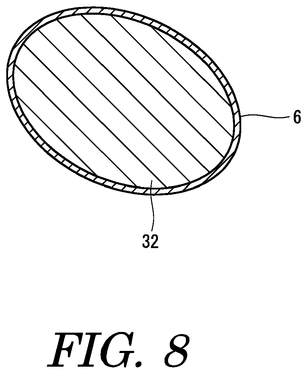

A forearm 32 (see FIG. 8) is passed through the arm cover 6. The arm cover 6 covers the entire forearm 32. A part of an upper arm 34 is also passed through the arm cover 6. The arm cover 6 covers the part of the upper arm 34. It is clear from FIGS. 1 to 4 and 7 that the diameter of the arm cover 6 decreases from the elbow toward the wrist. The arm cover 6 having such a shape fits to the forearm 32. The sleeve 2 may include the arm cover 6 that does not cover the upper arm 34. The sleeve 2 may include the arm cover 6 that covers a part of the forearm 32.

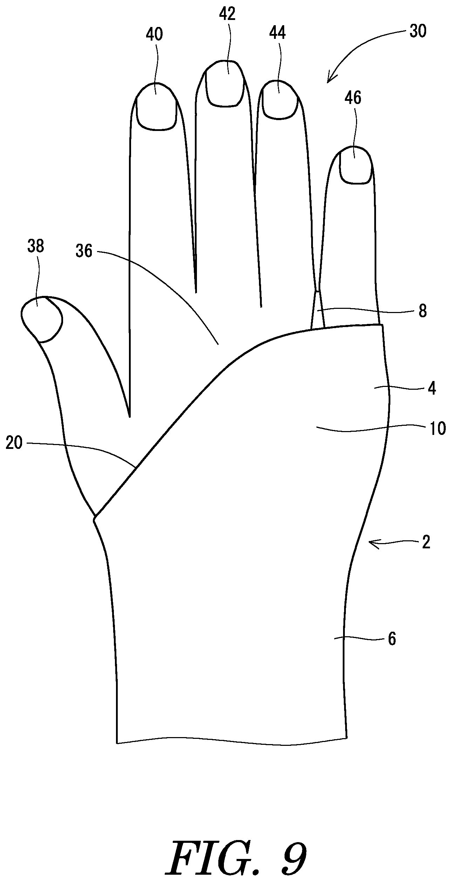

FIG. 9 is a front view showing, in an enlarged manner, a part of the pointing device operating sleeve 2 of FIG. 7 together with the hand 30 of the player. FIG. 9 shows a back 36, a thumb 38, an index finger 40, a middle finger 42, a ring finger 44, and a little finger 46 of the hand 30. The back-side panel 10 covers a part of the back 36 of the hand 30. The back-side panel 10 covers none of the fingers.

In FIG. 9, the little finger 46 is passed through the hole 26 (see FIG. 3). The sleeve 2 may include the hole 26 through which the ring finger 44 is passable. The sleeve 2 may include the hole 26 through which the little finger 46 and the ring finger 44 are passable. Preferably, the sleeve 2 includes the hole 26 through which only the little finger 46 is passed.

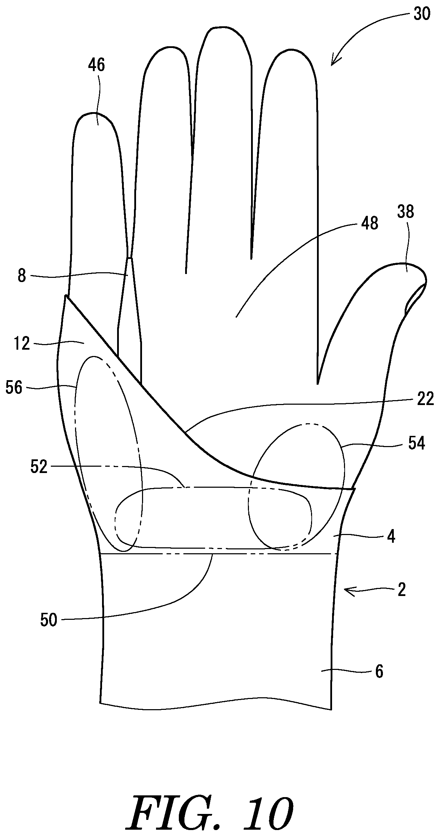

FIG. 10 is a rear view showing, in an enlarged manner, a part of the pointing device operating sleeve 2 of FIG. 7 together with the hand 30 of the player. FIG. 10 shows a palm 48. In FIG. 10, reference sign 50 indicates a wrist crease, and reference sign 52 indicates a palm heel. The wrist crease 50 is a boundary between the forearm 32 and the palm 48. The palm heel 52 is positioned on the top side with respect to the wrist crease 50. The palm-side panel 12 covers the palm heel 52. In the present embodiment, the palm-side panel 12 covers the entire palm heel 52.

In FIG. 10, reference sign 54 indicates a thenar eminence. The thenar eminence 54 is a fleshy mound on the palm 48 in the vicinity of the base of the thumb 38. The palm-side panel 12 covers a part of the thenar eminence 54. The palm-side panel 12 may cover the entire thenar eminence 54.

In FIG. 10, reference sign 56 indicates a hypothenar eminence. The hypothenar eminence 56 is a fleshy mound on the palm 48 in the vicinity of the base of the little finger 46. The palm-side panel 12 covers the entire hypothenar eminence 56. The palm-side panel 12 may cover a part of the hypothenar eminence 56.

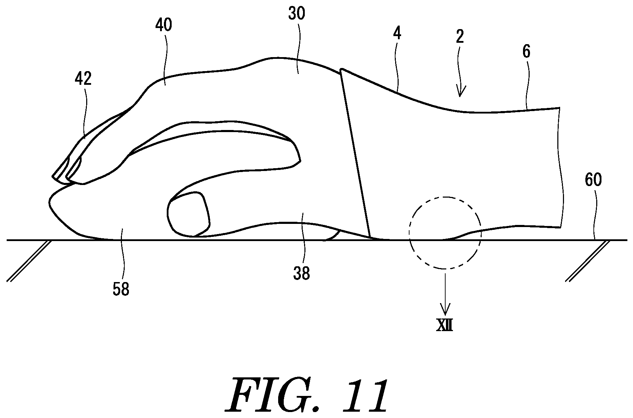

FIG. 11 shows the sleeve 2 seen from the inside. FIG. 11 further shows the hand 30 of the player, a mouse 58, and a mouse pad 60. FIG. 11 shows the thumb 38, the index finger 40, and the middle finger 42 of the hand 30. The mouse 58 is placed over the mouse pad 60. The player is holding the mouse 58 with the hand 30.

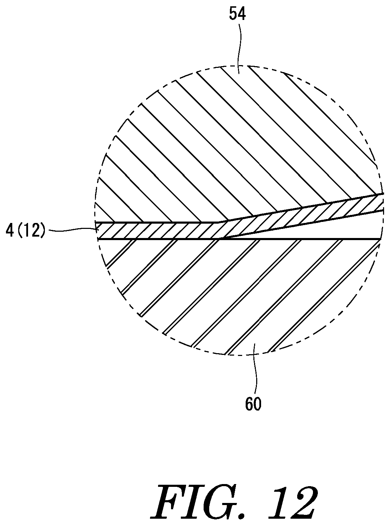

FIG. 12 is an enlarged sectional view of a zone that is denoted by reference sign XII of FIG. 11. FIG. 12 shows the thenar eminence 54, the palm-side panel 12 (i.e., the palm cover 4), and the mouse pad 60. It is clear from FIG. 12 that the palm cover 4 is present between the thenar eminence 54 and the mouse pad 60. When the player moves the mouse 58 intensely, the palm cover 4 suppresses direct rubbing between the thenar eminence 54 and the mouse pad 60. The palm cover 4 protects the thenar eminence 54.

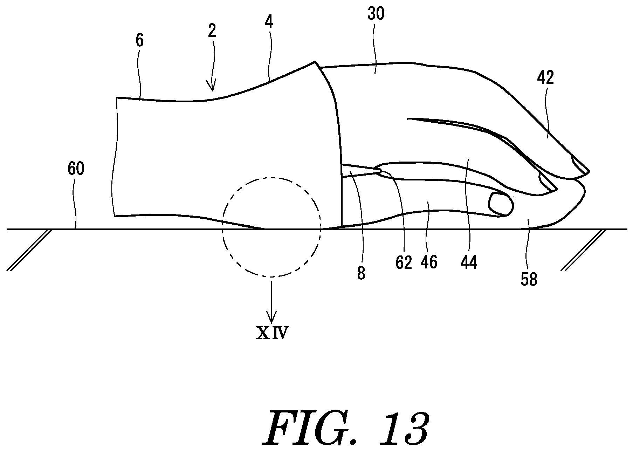

FIG. 13 shows the sleeve 2 seen from the outside. FIG. 13 further shows the hand 30 of the player, the mouse 58, and the mouse pad 60. FIG. 13 shows the middle finger 42, the ring finger 44, and the little finger 46 of the hand 30. The mouse 58 is placed over the mouse pad 60. The player is holding the mouse 58 with the hand 30.

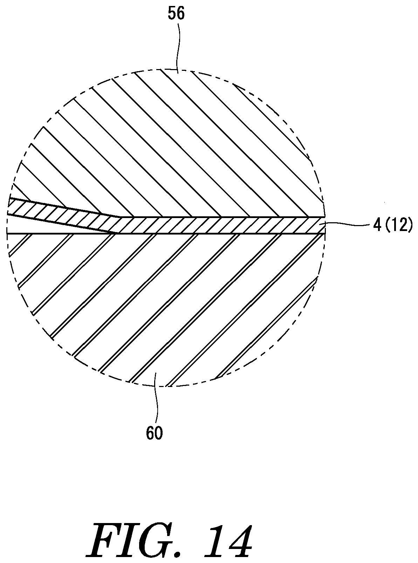

FIG. 14 is an enlarged sectional view of a zone that is denoted by reference sign XIV of FIG. 13. FIG. 14 shows the hypothenar eminence 56, the palm cover 4, and the mouse pad 60. It is clear from FIG. 14 that the palm-side panel 12 (i.e., the palm cover 4) is present between the hypothenar eminence 56 and the mouse pad 60. When the player moves the mouse 58 intensely, the palm cover 4 suppresses direct rubbing between the hypothenar eminence 56 and the mouse pad 60. The palm cover 4 protects the hypothenar eminence 56.

As shown in FIG. 13, the band 8 is engaged with a web 62 between the ring finger 44 and the little finger 46. Since the band 8 is attached to the palm cover 4, the band 8 suppresses the palm cover 4 from moving to the left in FIG. 13. In other words, the band 8 suppresses displacement of the palm cover 4 from the palm 48. The sleeve 2 is less likely to cause exposure of the thenar eminence 54 and the hypothenar eminence 56. Further, the sleeve 2 is less likely to cause hindrance to an action made by the player, the hindrance being due to displacement of the palm cover 4.

Since the little finger 46 or the ring finger 44 is passed through the hole 26, the band 8 is away from the thumb 38, the index finger 40, and the middle finger 42. Further, the first opening 14 has the above-described shape. Accordingly, as shown in FIG. 10, each of the thumb 38, the index finger 40, and the middle finger 42 is entirely exposed. The sleeve 2 does not hinder movements of the thumb 38, the index finger 40, and the middle finger 42 of the player. Therefore, the player can readily operate the buttons of the mouse 58 with the thumb 38, the index finger 40, or the middle finger 42.

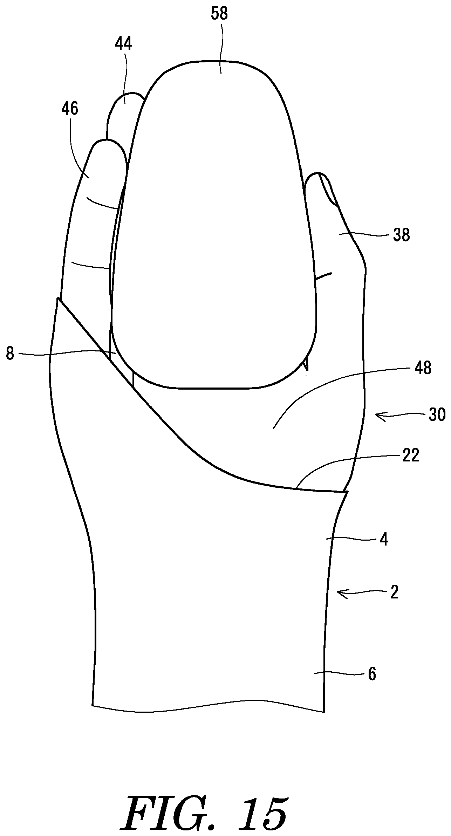

FIG. 15 shows, in an enlarged manner, the sleeve 2 of FIG. 7 together with the hand 30 of the player and the mouse 58. FIG. 15 shows the palm 48, the thumb 38, the ring finger 44, and the little finger 46. Each of the thumb 38, the ring finger 44, and the little finger 46 is in contact with the mouse 58. Although not illustrated, the index finger 40 and the middle finger 42 are in contact with the crown of the mouse 58 (see also FIG. 11). The player is holding the mouse 58 with five fingers.

As previously described, the palm-side edge 22 has a shape protruding toward the bottom side, and the area of the palm-side panel 12 is small. Therefore, as shown in FIG. 15, when the player holds the mouse 58, the mouse 58 does not come into contact with the palm-side panel 12. The mouse 58 may come into slight contact with the palm-side panel 12. Since the contact between the mouse 58 and the palm-side panel 12 is zero or a slight amount, displacement of the palm-side panel 12 with respect to the hand 30 due to the contact can be suppressed. Even in a case where the player operates the mouse 58 over a long period of time, the palm-side panel 12 is less likely to get wrinkled. This sleeve 2 can contribute to the operability of the mouse 58.

As previously described, the back-side edge 20 has a shape protruding toward the top side, and the area of the back-side panel 10 is large. Therefore, as shown in FIGS. 9, 11, and 13, the back-side panel 10 contacts the back 36 of the player over a wide area. This contact suppresses displacement of the palm cover 4 with respect to the hand 30.

It is clear from FIG. 4 that the height of the back-side edge 20 and the height of the palm-side edge 22 vary in the width direction X, and the difference between the height of the back-side edge 20 and the height of the palm-side edge 22 also vary in the width direction X. Reference sign Dm in FIG. 4 indicates the maximum value of the difference between the height of the back-side edge 20 and the height of the palm-side edge 22. Preferably, the maximum value Dm is greater than or equal to 20 mm. In a case where the sleeve 2 has the maximum value Dm of greater than or equal to 20 mm, the back-side panel 10 contacts the back 36 over a wide area, whereas the palm-side panel 12 does not contact or slightly contacts the mouse 58. In light of this, the maximum value Dm is more preferably greater than or equal to 25 mm, and particularly preferably greater than or equal to 30 mm. If the back-side panel 10 covers the fingers, it hinders the fitting comfort. In light of fitting comfort, the maximum value Dm is preferably less than or equal to 50 mm. The maximum value Dm is measured in a state where nothing is passed through the sleeve 2. The maximum value Dm is measured in a state where no force, except the gravitational force, is applied to the sleeve 2. At the time of measuring the maximum value Dm, the sleeve 2 is placed on a horizontal surface.

In FIG. 4, an arrow Ho represents the height of the outside end 16, and an arrow Hi represents the height of the inside end 18. As previously described, the outside end 16 is positioned on the top side (the upper side in FIG. 1) with respect to the inside end 18. Therefore, the height Ho is greater than the height Hi. In other words, the difference (Ho - Hi) is greater than zero.

The difference (Ho - Hi) is preferably greater than or equal to 5 mm, more preferably greater than or equal to 10 mm, and particularly preferably greater than or equal to 15 mm from the viewpoint that the palm cover 4 sufficiently protects the hypothenar eminence 56 and that the sleeve 2 is less likely to hinder movements of the thumb 38, the index finger 40, and the middle finger 42. The difference (Ho - Hi) is preferably less than or equal to 80 mm, more preferably less than or equal to 75 mm, and particularly preferably less than or equal to 70 mm. The difference (Ho - Hi) is measured in a state where nothing is passed through the sleeve 2. The difference (Ho - Hi) is measured in a state where no force, except the gravitational force, is applied to the sleeve 2. At the time of measuring the maximum value Dm, the sleeve 2 is placed on a horizontal surface.

In FIG. 4, an arrow W indicates the width of the band 8. The width W is preferably less than or equal to 20 mm, more preferably less than or equal to 16 mm, and particularly preferably less than or equal to 12 mm from the viewpoint that the band 8 is less likely to hinder movements of the hand 30 of the player. The width W is preferably greater than or equal to 2 mm, and particularly preferably greater than or equal to 4 mm from the viewpoint of suppressing tension applied to the web 62 so that the player will be less likely to feel discomfort.

The palm cover 4 may be obtained from a woven fabric, or may be obtained from a knitted material. Preferably, the palm cover 4 has elasticity, low frictional property, and water absorbability. Preferable examples of the material of the palm cover 4 include polyester, polyurethane, nylon, rayon, and acrylic. The material of the palm cover 4 may be a mixture of a plurality of raw materials. The material of the palm cover 4 may be spandex.

The arm cover 6 may be obtained from a woven fabric, or may be obtained from a knitted material. Preferably, the arm cover 6 has elasticity, low frictional property, and water absorbability. Preferable examples of the material of the arm cover 6 include polyester, polyurethane, nylon, rayon, and acrylic. The material of the arm cover 6 may be a mixture of a plurality of raw materials. The material of the arm cover 6 may be spandex. In the present embodiment, the material of the arm cover 6 and the material of the palm cover 4 are the same. The arm cover 6 may include a material that is different from the material of the palm cover 4.

The material of the band 8 may be an elastic material or a non-elastic material. Examples of the non-elastic material include cotton.

The sleeve 2 is also suitable for use in operating a pointing device different from the mouse 58. For example, the sleeve 2 is also suitable for use in operating a stick and a track ball. This sleeve 2 may be worn by an operator who operates a personal computer or the like.

### Examples

The following elucidates the effects of the pointing device operating sleeve according to Examples. However, the scope of the disclosure in the present specification should not be restrictively construed based on the description of the Examples.

### [Example 1]

The pointing device operating sleeve shown in FIGS. 1 to 15 was produced. The sleeve includes the band as a stopper. The dimensions of the sleeve were as shown below.
Height Ho: 428 mm
Height Hi: 367mm
Difference (Ho - Hi): 61 mm
Dm: 35 mm
Width W: 10 mm
A player wearing this sleeve operated a shooting game mouse. The palm-side panel did not come into contact with the mouse, and no displacement of the palm cover occurred.

### [Example 2]

A sleeve was obtained in the same manner as Example 1 except that the shape of the palm-side panel was changed and the maximum value Dm was set to 20 mm. A player wearing this sleeve operated a shooting game mouse. The palm-side panel came into slight contact with the mouse, and displacement of the palm cover occurred.

### [Comparative Example 1]

A sleeve was obtained in the same manner as Example 1, except that the palm-side panel was made congruent in shape with the back-side panel. The maximum value Dm of the sleeve was 0 mm. A player wearing this sleeve operated a shooting game mouse. The palm-side panel came into intense contact with the mouse, and significant displacement of the palm cover occurred.

These evaluation results clearly indicate the superiority of the sleeve according to each Example.

### [Disclosure Items]

The following items each disclose a preferred embodiment.

### [Item 1]

A pointing device operating sleeve including: a palm cover configured to cover a part of a palm, the palm cover including a first opening; and an arm cover configured to cover at least a part of a forearm, the arm cover being continuous with the palm cover and including a second opening, wherein: the first opening includes an outside end, an inside end, a back-side edge, and a palm-side edge, the back-side edge and the palm-side edge each being positioned between the outside end and the inside end; and the palm-side edge is, at least partly, positioned on a bottom side with respect to the back-side edge.

### [Item 2]

The sleeve according to item 1, wherein a maximum value of a difference between a height of the back-side edge and a height of the palm-side edge is greater than or equal to 20 mm.

### [Item 3]

The sleeve according to item 1 or 2, wherein the palm-side edge is, in its entirety, positioned on the bottom side with respect to the back-side edge.

### [Item 4]

The sleeve according to any one of items 1 to 3, wherein the palm-side edge is, at least partly, positioned on the bottom side with respect to a straight line that connects between the outside end and the inside end.

### [Item 5]

The sleeve according to item 4, wherein the palm-side edge is, in its entirety, positioned on the bottom side with respect to the straight line.

### [Item 6]

The sleeve according to any one of items 1 to 5, wherein the back-side edge is, at least partly, positioned on a top side with respect to a straight line that connects between the outside end and the inside end.

### [Item 7]

The sleeve according to item 6, wherein the back-side edge is, in its entirety, positioned on the top side with respect to the straight line.

### [Item 8]

The sleeve according to any one of items 1 to 7, wherein the palm-side edge has a shape protruding toward the bottom side, and the back-side edge has a shape protruding toward a top side.

### [Item 9]

The sleeve according to any one of items 1 to 8, wherein: the back-side edge includes a first edge and a second edge, the second edge being positioned on an inside with respect to the first edge; a height of the first edge decreases gradually from an outside toward the inside; a height of the second edge decreases gradually from the outside toward the inside; and a decrease rate of the height of the second edge is greater than a decrease rate of the height of the first edge.

### [Item 10]

The sleeve according to any one of items 1 to 9, wherein: the palm-side edge includes a third edge and a fourth edge, the fourth edge being positioned on an inside with respect to the third edge; a height of the third edge decreases gradually from an outside toward the inside; a height of the fourth edge decreases gradually from the outside toward the inside; and a decrease rate of the height of the third edge is greater than a decrease rate of the height of the fourth edge.

### [Item 11]

The sleeve according to any one of items 1 to 10, wherein the palm cover includes a back-side panel and a palm-side panel, the palm-side panel having an area that is less than an area of the back-side panel.

### [Item 12]

The sleeve according to any one of items 1 to 11, wherein a height of the outside end is greater than a height of the inside end.

### Industrial Applicability

The above-described sleeve is suitable for use by various e-sports players. This sleeve is also suitable for use in different applications other than e-sports.

### Reference Signs List

- 2: pointing device operating sleeve
- 4: palm cover
- 6: arm cover
- 8: band
- 10: back-side panel
- 12: palm-side panel
- 14: first opening
- 16: outside end
- 18: inside end
- 20: back-side edge
- 20a: first edge
- 20b: second edge
- 22: palm-side edge
- 22a: third edge
- 22b: fourth edge
- 24: second opening
- 26: hole
- 58: mouse
- 60: mouse pad

## Claims

1. A pointing device operating sleeve comprising:
a palm cover configured to cover a part of a palm, the palm cover including a first opening; and
an arm cover configured to cover at least a part of a forearm, the arm cover being continuous with the palm cover and including a second opening, wherein:
the first opening includes an outside end, an inside end, a back-side edge, and a palm-side edge, the back-side edge and the palm-side edge each being positioned between the outside end and the inside end; and
the palm-side edge is, at least partly, positioned on a bottom side with respect to the back-side edge.

2. The sleeve according to claim 1, wherein
a maximum value of a difference between a height of the back-side edge and a height of the palm-side edge is greater than or equal to 20 mm.

3. The sleeve according to claim 1 or 2, wherein
the palm-side edge is, in its entirety, positioned on the bottom side with respect to the back-side edge.

4. The sleeve according to claim 1 or 2, wherein
the palm-side edge is, at least partly, positioned on the bottom side with respect to a straight line that connects between the outside end and the inside end.

5. The sleeve according to claim 4, wherein
the palm-side edge is, in its entirety, positioned on the bottom side with respect to the straight line.

6. The sleeve according to claim 1 or 2, wherein
the back-side edge is, at least partly, positioned on a top side with respect to a straight line that connects between the outside end and the inside end.

7. The sleeve according to claim 6, wherein
the back-side edge is, in its entirety, positioned on the top side with respect to the straight line.

8. The sleeve according to claim 1 or 2, wherein
the palm-side edge has a shape protruding toward the bottom side, and the back-side edge has a shape protruding toward a top side.

9. The sleeve according to claim 1 or 2, wherein:
the back-side edge includes a first edge and a second edge, the second edge being positioned on an inside with respect to the first edge;
a height of the first edge decreases gradually from an outside toward the inside;
a height of the second edge decreases gradually from the outside toward the inside; and
a decrease rate of the height of the second edge is greater than a decrease rate of the height of the first edge.

10. The sleeve according to claim 1 or 2, wherein:
the palm-side edge includes a third edge and a fourth edge, the fourth edge being positioned on an inside with respect to the third edge;
a height of the third edge decreases gradually from an outside toward the inside;
a height of the fourth edge decreases gradually from the outside toward the inside; and
a decrease rate of the height of the third edge is greater than a decrease rate of the height of the fourth edge.

11. The sleeve according to claim 1 or 2, wherein
the palm cover includes a back-side panel and a palm-side panel, the palm-side panel having an area that is less than an area of the back-side panel.

12. The sleeve according to claim 1 or 2, wherein
a height of the outside end is greater than a height of the inside end.
